# EUROPÄISCHE PATENTANMELDUNG

(11) **EP 4 817 797 A1**
(43) Veröffentlichungstag der Anmeldung: **07.10.2026**
(21) Anmeldenummer: 25168422.1
(22) Anmeldetag: 04.04.2025
(51) Int. Cl.: B25D 17/00, B28D 1/26, C22C 38/00

(54) **NACHHALTIGER MEISSEL UND VERFAHREN ZUM NACHSCHÄRFEN DES MEISSELS**

(71) Anmelder: Hilti Aktiengesellschaft, 9494 Schaan (LI)
(72) Erfinder: Horváth, Bálint, 6000 Kecskemét (HU); Rakonczai, Gabor, 6042 Fülöpháza (HU); Tajthi, Norbert, 2740 Abony (HU); Sobiech, Matthias, 88131 Bodolz-Bettnau (DE)
(74) Vertreter: Hilti Aktiengesellschaft Corporate Intellectual Property

(57) **Zusammenfassung**

Nachhaltiger Meißel (1), aufweisend einen Schaft (10), der sich entlang einer Längsachse (L) erstreckt, einen Verbindungsabschnitt (20), der an einem ersten Ende des Schafts (10) angeordnet und einen Arbeitsabschnitt (30), der an einem zweiten Ende des Schafts (10) angeordnet ist, das dem ersten Ende des Schafts (10) gegenüber liegt. Die Längsachse (L) verläuft durch den Verbindungsabschnitt (20), den Schaft (10) und den Arbeitsabschnitt (30). Der Arbeitsabschnitt (30) weist ein Material auf, das eine gleichbleibende Härte in einem Temperaturbereich von wenigstens 0°C bis 250°C aufweist. Weiterhin wird ein Verfahren zum Nachschärfen eines Meißels angegeben.

## Beschreibung

Die Erfindung betrifft einen Meißel, der einen Schaft, einen Verbindungsabschnitt und einen Arbeitsabschnitt aufweist, wobei der Schaft sich entlang einer Längsachse erstreckt und einen im Wesentlichen kreisförmigen Querschnitt hat, der Verbindungsabschnitt an einem ersten Ende des Schafts angeordnet ist, der Arbeitsabschnitt an einem zweiten Ende des Schafts angeordnet ist, das dem ersten Ende des Schafts gegenüber liegt.

Weiterhin betrifft die Erfindung ein Verfahren zum Nachschärfen eines Meißels.

### Stand der Technik

Meißel werden an Baustellen zur meißelnden Bearbeitung von mineralischem Gestein, beispielsweise Beton, Ziegel oder Stein, eingesetzt. Die Meißel werden an einer Arbeitsmaschine, wie einem Bohrhammer, Schlagbohrschrauber, Abbruchhammer oder Meißelhammer eingespannt. Während der Arbeitsausführung an einer Arbeitsposition kann es dazu kommen, dass sich der Meißel im Gestein festsetzt. Dies führt in der Regel dazu, dass der Meißel nicht mehr aus einem hineingearbeiteten Loch entfernt werden kann. Zudem ist eine weitere Bearbeitung des Gesteins nicht oder zumindest kaum noch möglich. Deshalb muss die Arbeit meist unterbrochen werden und der Meißel vom Gestein befreit werden.

Aus der WO2024120950A1 ist beispielsweise ein Meißel zur Bearbeitung von Gestein bekannt. Der Meißel weist Rippen am Arbeitsabschnitt zum Abtransport von Meißelstaub auf. Zudem weist der Meißel am Arbeitsabschnitt eine bauchförmige Verdickung auf, um ein Festsetzen zu verhindern.

Mit Meißel des Standes der Technik ist ein Festsetzen vorerst verhindert. Jedoch verschleißt das Arbeitsende des Meißels, nämlich seine Schneide, während der Materialbearbeitung. Dies führt zu einer Verschlechterung der Arbeitsparameter, wie die bereitgestellte Energie zur Spaltung des Materials an dem Arbeitsende, was zu einer Verlängerung der Arbeitsdauer führt. Außerdem läuft der Meißel unter anderem wieder Gefahr, während der Bearbeitung festzusetzen.

Zudem muss der Meißel stetig nachgeschärft werden. Beim Nachschärfen wird die Schneide abrasiv behandelt, so dass sein abgenutztes Arbeitsende, wie Schneide oder Spitze, wieder entsprechend der Anwendung des Meißels geformt wird. Beim abrasiven Formen wird Material an der Schneide oder Spitze abgetragen und diese neu geformt. Das abrasive Formen verursacht aufgrund der Reibung einen Temperaturanstieg an der zu bearbeitenden Stelle auf 500°C.

### Offenbarung der Erfindung

Typische Werkzeugmaterialien des Standes der Technik, wie beispielsweise Arbeitsstähle mit einer Silizium-Chrom-Legierung, werden beim Nachschärfen aufgrund des Temperatureintrags von 250°C, teilweise bis 500°C, weicher. Dies führt dazu, dass nachgeschärfte Meißel weniger harte Eigenschaften an dem Arbeitsende aufweisen und öfter nachgeschärft werden müssen. Der Meißel nutzt sich demensprechend auch stärker ab.

Es ist deshalb eine Aufgabe der Erfindung, einen nachhaltigeren Meißel bereitzustellen.

Gelöst wird die Aufgabe durch die Merkmale der unabhängigen Ansprüche. Vorteilhafte Ausgestaltungen sind insbesondere in den abhängigen Ansprüchen angegeben.

Ein Meißel gemäß der Erfindung weist einen Schaft, einen Verbindungsabschnitt und einen Arbeitsabschnitt auf, wobei eine Längsachse durch den Verbindungsabschnitt, Schaft und Arbeitsabschnitt verläuft, der Verbindungsabschnitt an einem ersten Ende des Schafts angeordnet ist und der Arbeitsabschnitt an einem zweiten Ende des Schafts angeordnet ist, wobei das zweite Ende des Schafts dem ersten Ende des Schafts gegenüber liegt. Erfindungsgemäß weist der Arbeitsabschnitt, insbesondere dessen Arbeitsende, ein Material auf, dessen Härte in einem Termperaturbereich von 0°C bis wenigstens 250°C im Wesentlichen gleich bleibt.

Insbesondere ist der Arbeitsabschnitt aus einer Stahllegierung, dessen Gefüge sowie die Verteilung ihrer Phasen sich durch Temperatureintrag beim Nachschärfen lokal nicht derart verändern, dass die Härte der Stahllegierung negativ beeinflusst wird. Insbesondere wird dabei auch nicht die Beschaffenheit und Verteilung der Mischkristalle verändert.

Dies hat zur Folge, dass beim Nachschärfen des Meißels nicht nur die Form des Arbeitsendes zur Materialbearbeitung hergestellt wird. Zudem bleibt die Härte des Arbeitsabschnitts im Wesentlichen gleich, so dass bei nachfolgendem Bearbeiten des Gesteins der Meißel nicht schneller als zur ersten Bereitstellung des Meißels nach dessen Herstellen abnutzt. Der Meißel kann nachgeschärft werden, ohne dass seine Materialeigenschaften negativ beeinflusst werden. Selbst nach mehrmaligem Nachschärfen wird der Meißel nicht signifikant weicher. Der Meißel ist somit länger einsetzbar, da er sich sowohl bei der Bearbeitung von Gestein als auch beim Nachschärfen nicht so stark abnutzt. Auch kann der Arbeitsabschnitt im Feld, d.h. insbesondere auf der Baustelle oder bei einem bauarbeitenden Betrieb, genauer nachgeschärft werden, was zu einer verbesserten Formgebung führt. Im Gegensatz zu Meißel des Standes der Technik wird somit auch der Vorgang zum Nachschärfen erleichtert, denn zusätzliche Kühlapparaturen zur Verhinderung der Härteänderung durch Temperatureintrag fallen weg.

Die Stahllegierung des Arbeitsabschnitts gemäß der Erfindung ist insbesondere ein hochlegierter martensitischer Chromstahl. Beispielsweise handelt es sich um einen X40CrMoV 5-1 Stahl.

In einer Ausgestaltung weist die Stahllegierung des Arbeitsabschnitts Molybdän und/ oder Vanadium als Legierungselemente auf. In einer Ausgestaltung als Stahllegierung des Arbeitsabschnitts ein martensitischer Chromstahl mit Vanadium und Molybdän als Legierungselemente. Molybdän dient in der Stahllegierung der Ausbildung von Karbiden, insbesondere Chromkarbide. Chromkarbide erhöhen eine höhere Härte der Stahllegierung bei Temperaturen bis zu 500°C, insbesondere in einem Temperaturbereich von 250°C bis 500°C. In der Stahllegierung des Arbeitsabschnitts liegt Vanadium zusammen mit Kohlenstoff insbesondere als Vanadiumcarbid vor. Vanadium und/ oder Vanadiumkarbid erzeugt dabei unter anderem eine feine Mikrostruktur des Gefüges. Dies erhöht die Festigkeit, Verschleißfestigkeit sowie Zähigkeit der Stahllegierung. Vorzugsweise beträgt der Anteil an Vanadium in der Stahllegierung bis zu etwa 1 %. Vorzugsweise beträgt der Anteil von Molybdän und/ oder Vanadium maximal 2 % vorzugsweise 1%. Es hat sich herausgestellt, dass ein Anteil von Molybdän von etwa 1 % bis 1,5 % optimal ist.

Ein schnelleres Nachschärfen bedingt oftmals einen schnelleren und höheren Temperatureintrag. Deshalb ist in einer Ausführungsform vorgesehen, dass das Material des Arbeitsabschnitts eine gleichbleibende Härte in einem Temperaturbereich von 0°C bis 500°C aufweist.

In einer Ausgestaltung weist der Meißel am Arbeitsabschnitt ein freies Ende auf, an dem ein Arbeitsendbereich ausgebildet ist. Der Arbeitsendbereich ist dabei in einer Ausgestaltung ausgebildet, in Erstreckung der Längsachse in einer ersten Richtung, welche vom Schaft zum freien Ende des Arbeitsabschnitts definiert ist, verjüngend ausgebildet ist.

In einer Ausgestaltung ist die Verjüngung keilförmig flach ausgebildet, so dass sie am Arbeitsendbereich eine längliche Schneide bildet. Der damit gebildete Meißel kann somit auch als sogenannter Flachmeißel gesehen werden. Die Verjüngung kann einen mehrstufigen Verlauf mit wenigstens einer Ebene und/ oder einen Abschnitt mit einer gekrümmten Fläche aufweisen.

In einer Ausgestaltung ist vorgesehen, dass der Arbeitsendbereich des Arbeitsabschnitts spitz zulaufend ausgebildet ist. In einer Ausführungsform ist der Arbeitsendbereich kegelförmig ausgebildet, so dass die Spitze des Kegels im Wesentlichen auf der Längsachse liegt und von dem Verbindungsabschnitt weggerichtet ist. Diese Form eignet sich besonders dafür, Krafteintrag von dem Verbindungsabschnitt, an dem eine Arbeitsmaschine einen Kraftimpuls in Längsrichtung vom Verbindungsabschnitt zum Arbeitsabschnitt einleitet, punktuell über die Spitze auf das zu bearbeitende Material zu leiten. Somit wird anhand der Spitze möglichst viel bereitgestellte Schlagkraft auf eine kleine Fläche übertragen. Die Kegelform hilft besonders beim Eindringen des Meißels in das Material, insbesondere Gestein.

In einer Ausgestaltung ist der Arbeitsendbereich prismatisch mit einer Spitze ausgebildet ist, insbesondere pyramidenförmig mit wenigstens drei, vorzugsweise vier oder sechs, Seitenflächen ausgebildet ist. Dabei liegt die Spitze des prismatischen Arbeitsendbereichs auf der Längsachse und zeigt vom Verbindungsabschnitt weg. Die Seitenkanten des prismatischen, insbesondere pyramidenförmigen Arbeitsendbereichs, sorgen für eine zusätzliche Keilwirkung beim Eindringen des Meißels in das zu bearbeitende Material, so dass das Material an der Arbeitsposition nahezu mechanisch weggesprengt wird. Gegenüber einem Meißel mit kegelförmigem Arbeitsendbereich, der eher zum Festsetzen neigt, wird durch wenigen Seitenkanten die Möglichkeit zum Festsetzen verringert.

Es hat sich herausgestellt, dass ein pyramidenförmiger Arbeitsendbereich mit vier bis acht Seitenkanten, insbesondere vier bis sechs Seitenkanten, vorzugsweise vier Seitenkanten, die Seitenkanten zur Keilwirkung entgegen dem Festsetzen nutzt und gleichzeitig die Vorteile eines Meißels mit kegelförmigen Arbeitsendbereich ideal kombiniert. Deshalb ist in einer Ausführungsform mit einem pyramidenförmigen Arbeitsendbereich mit vier Seitenkanten bzw. vier Seitenflächen ausgebildet.

In einer Ausgestaltung ist der Arbeitsendbereich als Kegelstumpf oder Pyramidenstumpf ausgebildet. Die Grundfläche des Kegelstumpfs oder des Pyramidenstumpfs erstreckt sich senkrecht zur Längsachse. Die Deckfläche des Kegelstumpfs oder des Pyramidenstumpfs weist vom Verbindungsabschnitt weg. Somit wird die von der Werkzeugmaschine eingeleitet Schlagkraft nicht wie bei einem spitz zulaufenden Arbeitsendbereich punktuell, sondern auf eine kleine Fläche übertragen. Vorzugsweise beträgt die Fläche der Deckfläche maximal 30 % der Grundfläche, insbesondere maximal 10 % und besonders bevorzugt maximal 5 %. Insbesondere bei der Bearbeitung, von porösem Material, beispielsweise bei Aufbrucharbeiten oder Abbrucharbeiten, kann hier aufgrund des flächigen Krafteintrags eine Kombination von punktueller und flächiger Schlageinwirkung erzielt werden. Das Material platzt regelrecht von der zu bearbeitenden Oberfläche weg und der Meißel dringt zudem in das Material gut ein. Hier hat sich bei Gesteinsmaterial ein Flächenmaß von 0,2 bis 2 mm² als besonders wirksam herausgestellt.

In einer Ausgestaltung ist der erfindungsgemäße Meißel mehrteilig ausgeführt. Die jeweiligen Teile können mittels Form,- Kraft- und/ oder Stoffschluss verbunden sein.

In einer Ausführungsform ist der Meißel dreiteilig ausgeführt, wobei der Verbindungsabschnitt, der Schaft und der Arbeitsabschnitt separat hergestellt sind und zur Herstellung und Verwendung des Meißels zusammengesetzt sind.

In einer Ausführungsform sind der Verbindungsabschnitt und der Schaft einteilig und der Arbeitsabschnitt separat ausgeführt. Dabei ist der Schaft mit dem Arbeitsabschnitt bevorzugt mittels Stoffschluss, insbesondere mittels Schweißen, verbunden. In einer bevorzugten Ausführungsform sind der Arbeitsabschnitt mittels Ultraschallschweißen, Reibschweißen und/ oder Induktionsschweißen verbunden. Reibschweißen hat sich als Schweißvorgang besonders vorteilhaft erwiesen, da die Herstellung des Meißels besonders kostengünstig und einfach möglich ist. Der Meißel weist an dem Bereich der Verbindung zwischen Schaft und Arbeitsabschnitt eine Schweißzone auf. Aufgrund des Stoffschlusses ist die Schweißzone in der Regel keine harte Grenze, sondern bildet einen Übergangsbereich mit einer Materialmischung der Materialien des Arbeitsabschnitts und des Schafts, ähnlich einer Diffusionszone.

Die mehrteilige Ausführung hat den Vorteil, dass für jeden Abschnitt nach Abschnitt ein der Verwendung und Beanspruchung angepasstes Material bereitgestellt werden kann. So ist beispielsweise für den Arbeitsabschnitt das oben genannte Härte-Temperatur-beständige Material verwendet wird, wobei für den Schaft und den Verbindungsabschnitt ein anderes Material bereitgestellt werden kann, beispielsweise mit höherer Elastizität für die Verwendung am Schaft. Insbesondere kann der Meißel so hinsichtlich Kosten und technischer Anwendung und Anforderung angepasst werden. Als mögliches Material für den Schaft und/ oder Verbindungsabschnitt ist vorzugsweise ein hochlegierter Stahl umfassend wenigstens eins der Legierungselemente Chrom, Silizium, Molybdän, Nickel, vorzugsweise wenigstens Chrom mit einem anderen Legierungspartner. Beispielsweise wird als Material für den Schaft 45SiCrV6, 42CrMo4 oder 34CrNiMo6 verwendet.

In einer Ausführung ist vorgesehen, dass der Meißel nachschärfbar ausgebildet ist, wobei besonders der Arbeitsabschnitt, insbesondere Arbeitsendabschnitt, zum Nachschärfen bestimmt ist. Dabei ist der Arbeitsabschnitt ausgebildet, nach wenigstens drei, vorzugsweise zehn, Vorgänge zum Nachschärfen und einem damit bedingten Temperatureintrag von maximal 500°C seine bisherige Härte im Wesentlichen beizubehalten.

Dass der Arbeitsabschnitt seine Härte im Wesentlichen beibehält, bedeutet, dass die Verwendungshärte des Arbeitsabschnitts sich um weniger als 15 %, insbesondere von weniger als 5 %, vorzugsweise von weniger als 3 %, von der Anfangshärte, welche der Arbeitsabschnitt nach Herstellung des Meißels aufweist, unterscheidet. Vorzugsweise beträgt die Anfangshärte 210 bis 240 HB bzw. 45-55 HRC bei Raumtemperatur. Insbesondere beträgt die Reduktion der Härte (Verwendungshärte) des Arbeitsabschnitts nach dem dritten, vorzugsweise nach dem zehnten, Nachschleifen weniger als 15 %, insbesondere weniger als 5 %, vorzugsweise weniger als 3 %, von der Anfangshärte.

Ein Nachschärfen bedingt wie oben erwähnt durch das damit verbundene abrasive Formgebungsverfahren ebenfalls einen lokalen Termperatureintrag in das Material. Für das Nachschärfen des erfindungsgemäßen Meißels ist deshalb in der Regel ein Temperatureintrag von bis wenigstens 250°C, insbesondere von bis zu 500°C über einen Zeitbereich von 30 s bis 60 s relevant und zu betrachten. Der Temperatureintrag findet nicht gleichmäßig im Material des gesamten Arbeitsabschnitts statt, sondern vorrangig in dem Bereich, an dem das Nachschärfen durchgeführt wird, beginnend an den entsprechenden Oberflächen. Insbesondere betrifft dies die Meißelkante oder Meißelspitze. Somit ist für das Nachschärfen auch eine entsprechende lokale Temperaturerhöhung als gleichbedeutend und analog zu betrachten

In einer Ausführung weist der Arbeitsabschnitt den Arbeitsendbereich und einen Arbeitsführungsabschnitt auf, wobei der Arbeitsführungsabschnitt entlang der Längsachse zwischen Schaft und Arbeitsendbereich angeordnet bzw. ausgebildet ist. Der Arbeitsführungsabschnitt weist in einem Übergangsbereich zwischen Arbeitsführungsabschnitt zum Schaftübergangsabschnitt eine erste Querschnittsfläche auf, welche sich senkrecht zur Längsachse erstreckt. Weiterhin weist der Schaft, insbesondere der Schaftführungsabschnitt an einem Übergangsbereich vom Schaftübergangsabschnitt zum Schaftführungsabschnitt, eine zweite Querschnittsfläche auf, welche sich senkrecht zur Längsachse erstreckt. Die erste Querschnittsfläche des Arbeitsführungsabschnitts beträgt dabei maximal 90 % der zweiten Querschnittsfläche des Schafts, insbesondere des Schaftführungsbereichs. Vorzugsweise sind der Arbeitsführungsabschnitt und/ oder der Schaftführungsabschnitt zylindrisch ausgebildet. Die erste und/ oder zweite Querschnittsfläche sind beispielsweise kreisförmig oder ellipsenförmig ausgebildet. Die Achsen des Arbeitsführungsabschnitts und/ oder der Schaftführungsabschnitts verlaufen deckungsgleich mit der Längsachse.

Der Arbeitsführungsabschnitt und/ oder der Schaftführungsabschnitt sind in einer Ausgestaltung so ausgebildet, dass die entsprechende Außenwand (dritte bzw. zweite Außenwand) im Wesentlichen parallel zur Längsachse verläuft.

In einer Ausgestaltung ist vorgesehen, dass der Schaft zwei Bereiche aufweist, nämlich einen Schaftübergangsabschnitt und einen Schaftführungsabschnitt. Der Schaftübergangsabschnitt ist dabei an einem Ende des Schafts in Längsrichtung der Längsachse zum Arbeitsabschnitt hin ausgebildet. Der Schaftführungsabschnitt ist zwischen dem Schaftübergangsabschnitt und dem Verbindungsabschnitt ausgebildet. Der Schaftführungsabschnitt weist einen ersten Außendurchmesser, betrachtet senkrecht zur Längsachse, auf. Der Arbeitsführungsabschnitt weist einen zweiten Außendurchmesser auf, betrachtet senkrecht zur Längsachse. Der erste Außendurchmesser ist größer als der zweite Außendurchmesser. Vorzugsweise beträgt der zweite Außendurchmesser 15 % weniger als der erste Außendurchmesser des Schaftführungsabschnitts.

Vorzugsweise ist der Schaft mit dem Schaftführungsabschnitt und dem Schaftübergangsabschnitt monolithisch.

Weiterhin weist der Schaftübergangsabschnitt eine erste Außenwand auf. Der Schaftführungsabschnitt weist eine zweite Außenwand auf, welche zugleich eine Mantelfläche des Schaftführungsabschnitts dargestellt. Der Arbeitsführungsabschnitt weist die dritte Außenwand auf, welche zugleich eine Mantelfläche des Arbeitsführungsabschnitts dargestellt. Die erste Außenwand des Schaftübergangsabschnitts ist derart ausgebildet, die zweite Außenwand (des Schaftführungsabschnitts) mit der dritten Außenwand (des Schaftübergangsabschnitts) zu verbinden.

Der Schaftübergangsabschnitt weist dabei hinsichtlich seiner ersten Außenwand einen dritten Außendurchmesser auf. Der dritte Außendurchmesser verkleinert sich vorzugsweise vom Schaftführungsabschnitt zum Arbeitsführungsabschnitt in Richtung vom Schaftführungsabschnitt zum Arbeitsführungsabschnitt.

In einer Ausgestaltung ist dabei vorgesehen, dass die größte Steigung der ersten Außenwand des Schaftübergangsabschnitts vom Arbeitsabschnitt zum Schaftführungsabschnitt gegenüber der Längsachse des Meißels kleiner als 90°, insbesondere kleiner als 45° und vorzugsweise zwischen 20° und 10°, ist. Die Steigung ist vorzugsweise konstant, wobei an einem Übergangsbereich vom Arbeitsführungsabschnitt zum Schaftübergangsabschnitt und/ oder vom Schaftübergangsabschnitt zum Schaftführungsabschnitt die Steigung der ersten Außenwand des Schaftübergangsabschnitts variierend ausgebildet ist, um jeweils einen sanften Übergang in Form von beispielsweise eines Bogens auszubilden.

In einer Ausgestaltung ist vorgesehen, dass die erste Außenwand des Schaftübergangsabschnitts einen stetigen Verlauf zwischen der zweiten Außenwand des Schaftführungsabschnitts und der dritten Außenwand des Arbeitsführungsabschnitts aufweist.

Selbst wenn vorliegend von einem Durchmesser, beispielsweise dem ersten, zweiten und dritten Außendurchmesser, die Rede ist, so bedingt dies nicht zwangsweise, dass es sich der Durchmesser auf einen Körper mit einem kreisförmigen Querschnitt bezieht. Der Begriff ist so auszulegen, dass der Durchmesser einen Abstand zur Längsachse definiert. So wäre der Begriff Außendurchmesser als Abstand eines Punkts der Außenwand senkrecht zur Längsachse zu verstehen. Werden mehrere Außendurchmesser in Relation zueinander beschrieben, so sind dabei Punkte an einer oder mehrere Außenwände zu verstehen, die in gleicher Flucht in Längserstreckung der Längsachse liegen und beispielsweise jeder auf einer gemeinsam mit der Längsachse aufgespannten Ebene liegen. Der Schaftführungsabschnitt, der Schaftübergangsabschnitt und/ oder Arbeitsführungsabschnitt können jeweils eine ellipsenförmige Querschnittsfläche senkrecht zur Längsachse, eine kreisförmige Querschnittsfläche senkrecht zur Längsachse oder eine mehreckige Querschnittsfläche senkrecht zur Längsachse aufweisen, wobei die mehreren Ecken, beispielsweise sechs, vorzugsweise regelmäßig radial zur Längsachse angeordnet sind.

In einer Ausgestaltung weist der Meißel am Arbeitsabschnitt wenigstens zwei Arbeitsabschnittstaubkanäle auf. Die Arbeitsabschnittstaubkanäle sind jeweils als Rille an der Außenwand des Arbeitsabschnitts, insbesondere an der zweiten Außenwand des Arbeitsführungsabschnitts, ausgebildet. Die Arbeitsabschnittstaubkanäle erstrecken sich vorzugsweise als Vertiefung in Längserstreckung der Längsachse. Dabei ist zu verstehen, dass die Arbeitsabschnittstaubkanäle als lokale Einbuchtung oder Senke gegenüber einer Außenwand des Arbeitsabschnitts ausgebildet sind und dementsprechend eine Tiefe gegenüber der Außenwand des Arbeitsabschnitts aufweisen.

Die Arbeitsabschnittstaubkanäle sorgen für einen effizienten Abtransport von durch das Meißeln abgetragenen grob und feinkörnigen Staub aus der Arbeitsposition, d.h. von dem Arbeitsendbereich weg. Der Abtransport geschieht durch die Meißelbewegungen des Meißels und damit einer Beschleunigung des Staubs in Richtung des Schafts, so dass ein freigestemmtes Material vom Arbeitsendbereich des Meißels zertrümmert wird und als feiner und grober Staub von dem Arbeitsendbereich in Richtung des Schafts bewegt wird. Außerdem ermöglicht erneut freigestemmtes Material einen Nachschub in den Arbeitsabschnittstaubkanäle und damit ein weiteres Bewegen des Materials in den Arbeitsabschnittstaubkanälen zum Schaft hin. Zudem sorgen die Arbeitsabschnittstaubkanäle dazu, dass ein Freiraum zwischen dem Arbeitsabschnitt und den zu meißelnden Gegenstand bleibt. Ein Festsetzen des Meißels wird damit verhindert. Weiterhin wird verhindert, dass freigestemmtes Material am Arbeitsendbereich durch den Meißel dort wieder verdichtet wird.

In einer Ausgestaltung weist der Meißel am Schaft zumindest abschnittsweise wenigstens zwei Schaftstaubkanäle auf. Diese zwei Schaftstaubkanäle erstrecken sich wenigstens partiell über den Schaft bevorzugt in Längserstreckung der Längsachse. Vorzugsweise erstrecken sich die Schaftstaubkanäle wenigstens über den Schaftübergangsabschnitt bis zum Schaftführungsabschnitt, insbesondere zumindest teilweise über den Schaftführungsabschnitt. Die Schaftstaubkanäle haben analog zu den Arbeitsabschnittstaubkanäle den gleichen Effekt und führen entsprechend fein und grobkörnigen Staub vom Arbeitsabschnitt in Richtung des Verbindungsbereichs.

Auch wenn hier beschrieben ist, dass die Schaftstaubkanäle und/ oder die Arbeitsabschnittstaubkanäle Staub abführen, so ist darunter zu verstehen, dass im Wesentlichen Staub von der Arbeitsposition abgeführt wird. Soweit der Meißel bei der Bearbeitung von Material, bspw. Gestein, bereits innerhalb des Materials ist, beispielswiese in einem Loch, führen die Arbeitsabschnittstaubkanäle und/ oder Schaftstaubkanäle den Staub von der Arbeitsposition so weit in Richtung des Verbindungsabschnitts des Materials weg, wie weit in der Regel der Meißel in dem Material ist und Arbeitsabschnittstaubkanäle und/ oder Schaftstaubkanäle noch über das Material hinausragen. Sobald der durch die Arbeitsabschnittstaubkanäle und/ oder Schaftstaubkanäle transportiere Staub einen Abschnitt des Meißels erreicht, der nicht mehr in dem Gestein ist, wird der Staub durch die Bewegung des Meißels auch vom Meißel weggeschleudert. Somit wird der Staub vorrangig in den Arbeitsabschnittstaubkanälen und/ oder Schaftstaubkanälen bewegt, soweit der Meißel auch im Material ist.

Die Schaftstaubkanäle sind vorzugsweise jeweils als Rille ausgebildet, insbesondere als Vertiefung in der Außenwand des Schafts.

Dabei ist zu verstehen, dass eine Vertiefung eine lokale Einbuchtung oder Senke gegenüber einer benachbarten Außenwand ist und dementsprechend eine Tiefe gegenüber der Außenwand des Arbeitsabschnitts aufweist.

In einer bevorzugten Ausgestaltung sind die zwei Schaftstaubkanäle korrespondierend zu den zwei Arbeitsabschnittstaubkanälen ausgebildet. Das bedeutet, dass die Arbeitsabschnittstaubkanälen sich zu den Schaftstaubkanälen erstrecken und damit fortgeführt werden. Somit ist ein durchgehender Transport des Staubs durch die Arbeitsabschnittstaubkanäle zu den Schaftstaubkanälen ohne Unterbrechung möglich.

In einer besonderen Ausgestaltung weisen die Schaftstaubkanäle an einer Übergangsstelle zu den Arbeitsabschnittstaubkanälen ein gleiches Querschnittsprofil senkrecht zur Längsrichtung auf, wie die Arbeitsabschnittstaubkanäle.

In einer Ausgestaltung weist die Außenfläche des Arbeitsabschnitts in einem Übergang zu den Arbeitsabschnittstaubkanälen eine Erhöhung, vorzugsweise eine wulstartige Erhöhung auf. In einer weiteren Ausgestaltung weist die Außenfläche des Schafts im Übergang zu den Schaftstaubkanälen eine Erhöhung, vorzugsweise eine wulstartige Erhöhung auf. Die Erhöhung an dem Übergang erstreckt sich vorzugsweise über einen Bereich zwischen einer Randbegrenzung in Längserstreckung der Schaftstaubkanäle und/ oder der Arbeitsabschnittstaubkanäle und der Außenflächen des Schafts bzw. des Arbeitsabschnitts. Dies verringert weiterhin ein Festsetzen des Meißels in dem zu bearbeitenden Material.

Weiterhin wird die oben genannte Aufgabe durch ein Verfahren zum Nachschärfen eines Meißels gelöst. Das erfindungsgemäße Verfahren sieht vor, dass ein Meißel gemäß wenigstens einer der oben genannten Ausführung oder Ausgestaltung bereitgestellt wird, wobei der Meißel zusätzlich einen verschlissenen Arbeitsendbereich aufweist. In einem weiteren Schritt wird der Arbeitsabschnitt abrasiv bearbeitet, wodurch insbesondere das freie Ende des Arbeitsabschnitts bearbeitet wird und dieses in eine gewünschte Arbeitsgeometrie geformt wird. Die gewünschte Arbeitsgeometrie kann wie ein Flachmeißel einen Arbeitsendbereich mit flacher Meißelkante bzw. -Schneide aufweisen, wobei die Meißelkante mehrstufig flach geschärft sein kann. In einer Alternative ist die Arbeitsgeometrie entsprechend eines Spitzmeißels mit einer spitz zulaufenden Geometrie ausgebildet. Beispielsweise kann es sich dabei um eine Pyramide mit drei, vier, fünf, sechs oder mehreren Seitenflächen, einen Kegel mit oder ohne Spitze, d.h. mit abgeflachter Spitze in Form eines Pyramidenstumpfs und/ oder eines Kegelstumpfs handeln, um eine Meißelspitze auszubilden. Das abrasive Schleifen bzw. Schärfen erfolgt bei einer Arbeitstemperatur in einem Bereich an dem Arbeitsendbereich von 200°C bis 500°C. Erfindungsgemäß ist vorgesehen, dass vor dem Schleifen und Formen des Arbeitsabschnitts kein Vortemperierschritt durchgeführt wird. Somit wird vorab kein zusätzliches Erwärmen des Meißels durchgeführt, um das Material des Arbeitsabschnitts zumindest abschnittsweise auf eine Arbeitstemperatur zu erwärmen. Weiterhin wird erfindungsgemäß kein Nachtemperierschritt, insbesondere kein zusätzliches Härten, durchgeführt. Ein Nachtemperieren wäre beispielsweise ein Temperieren des Arbeitsabschnitts gemäß einem definierten Programm. Insbesondere könnte mithilfe des Nachtemperierens eine Änderung der Materialeigenschaften wegen Temperatureintrag beim Schärfen rückgängig gemacht werden. Da erfindungsgemäß ein Meißel wie oben erfindungsgemäß beschrieben verwendet wird, wird gemäß dem erfindungsgemäßen Verfahren auf das Vortemperieren und das Nachtemperieren verzichtet. Insbesondere entspricht aufgrund des bereitgestellten Meißels die Härte des Arbeitsabschnitts nach dem Schleifen bzw. Schärfen und Formen der Härte des Arbeitsbereichs vor dem Schleifen bzw. Formen. D. h., die Härte bleibt im Wesentlichen gleich.

Mit der Erfindung kann somit auf aufwändige Temperierschritte verzichtet werden, wobei auch nach mehrmaligem Nachschärfen die Härte des Arbeitsabschnitts im Wesentlichen gleichbleibt. Der Meißel ist demnach gegenüber dem Stand der Technik umweltfreundlicher, kostengünstiger im Unterhalt und somit nachhaltiger.

### Kurze Beschreibung der Figuren

In den Figuren zeigen:
Fig. 1 eine schematische Darstellung eines Ausführungsbeispiels eines erfindungsgemäßen Meißels;
Fig. 2 eine schematische Darstellung des Meißels aus Fig. 1 in einer Seitenansicht;
Fig. 3 eine schematische Schnittansicht entlang der Schnittlinie A-A aus Fig. 2;
Fig. 4 eine schematische Schnittansicht entlang der Schnittlinie B-B aus Fig. 2;
Fig. 5 eine schematische Schnittansicht entlang der Schnittlinie C-C aus Fig. 2; und
Fig. 6 ein Verfahren zur Verwendung eines erfindungsgemäßen Meißels und zu dessen Nachschärfen.

### Ausführliche Beschreibung der Figuren

In der nachfolgenden Beschreibung der Figuren werden zur Erleichterung des Verständnisses für gleiche oder sich funktional entsprechende Elemente über die verschiedenen Figuren hinweg jeweils die gleichen Bezugszeichen verwendet.

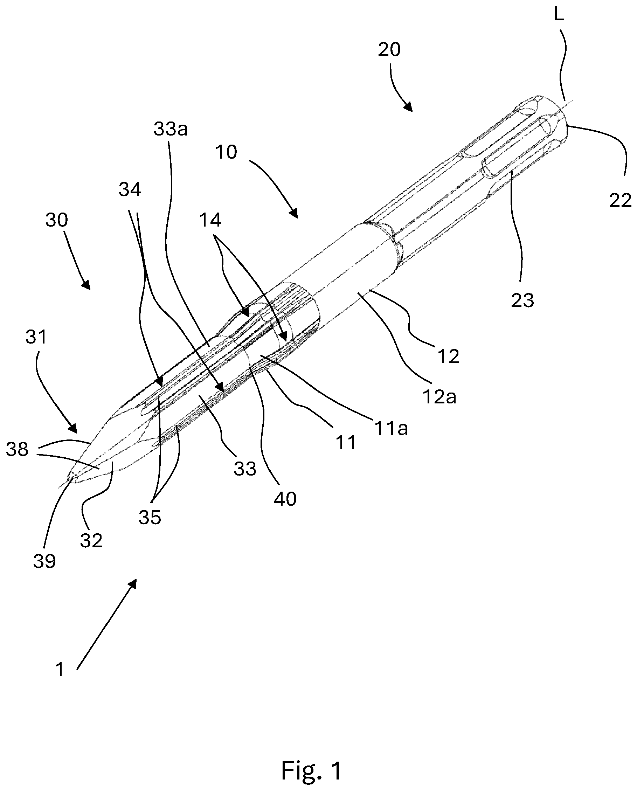

In der Fig. 1 ist eine schematische dreidimensionale Darstellung eines Ausführungsbeispiels eines Meißels 1 gemäß der Erfindung dargestellt. Der Meißel 1 umfasst einen Verbindungsabschnitt 20, einen Schaft 10 und einen Arbeitsabschnitt 30.

Der Verbindungsabschnitt 20 weist an einem freien Ende, welches dem Schaft 10 gegenüberliegt, eine Schlagfläche 22 auf.

Durch den Arbeitsabschnitt 30, den Schaft 10 und den Verbindungsabschnitt 20 sowie seiner Schlagfläche 22 verläuft eine Längsachse L. Der Meißel 1 kann durch Schläge auf die Schlagfläche 16, beispielsweise anhand einer Werkzeugmaschine, wie Bohrhammer, Schlagbohrschrauber, Abbruchhammer oder Meißelhammer, in ein Material, insbesondere Gestein, eingetrieben werden. Dazu weist der Meißel 1 an dem Verbindungsabschnitt 20 einen Einsteckbereich 23 auf, das im vorliegenden Beispiel der Fig. 1 als Sechskant ausgebildet ist. Der Einsteckbereich 23 weist Nuten für den Eingriff und die Verbindung mit der Werkzeugmaschine auf.

Der Arbeitsabschnitt 30 weist entlang der Längsachse L ein erstes Ende und ein zweites Ende auf, wobei das erste Ende dem Schaft 10 zugeordnet ist und das zweite Ende eine freien Ende 31 des Arbeitsabschnitts 30 zugeordnet ist und dem Schaft 10 gegenüber liegt. Der Arbeitsabschnitt 30 ist über sein erstes Ende mit einem zweiten Ende des Schafts 10 verbunden. Dem zweiten Ende des Schafts 10 liegt ein erstes Ende des Schafts 10 gegenüber. An dem ersten Ende des Schafts 10 ist der Verbindungsabschnitt 20 angeordnet.

Der Arbeitsabschnitt 30 umfasst entlang der Längsachse L angrenzend zum Schaft 10 einen Arbeitsführungsabschnitt 33. Weiterhin weist der Arbeitsabschnitt 30 entlang der Längsachse L angrenzend zum Arbeitsführungsabschnitt 33 einen Arbeitsendbereich 32.

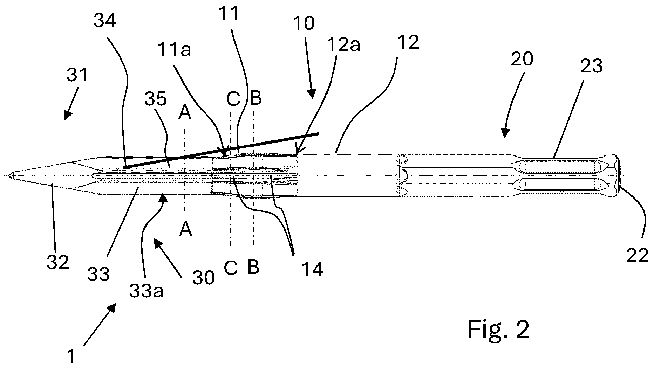

Der Arbeitsendbereich 32 ist pyramidenförmig ausgebildet. Der Arbeitsendbereich 32 weist vier Seitenflächen 38 und eine Spitze 39 auf, durch die sich die Längsachse L erstreckt. Der pyramidenförmige Arbeitsendbereich 32 ist mehrstufig geformt, so dass die verjüngende Erstreckung zur Spitze 39 einen Knick aufweisen, d.h. die vier Seitenflächen 38 weisen jeweils einen Knick auf, so dass die Steigung der Seitenflächen 38 im Bezug zur Längsachse L nicht linear verläuft. In dem vorliegenden Ausführungsbeispiel der Fig. 2 beträgt die Steigung der Seitenflächen 38 auf der der Spitze zugewandten Seite des Arbeitsendbereichs 32 30° und die Steigung der Seitenflächen 38 auf der dem Schaft 10 zugewandten Seite des Knicks des Arbeitsendbereichs 32 beträgt 12°. In einer alternativen, nicht dargestellten Ausführungsvariante weisen die Seitenflächen 38 jeweils keinen Knick auf, so dass die Steigung der Seitenflächen 38 stetig verläuft.

Im vorliegenden Ausführungsbeispiel der Fig. 1 ist der Arbeitsführungsabschnitt 33 vorwiegend zylindrisch ausgebildet, d.h. die Kontur einer Außenwand des Arbeitsführungsabschnitts 33a erstreckt sich im Wesentlichen parallel zur Längsachse L.

Der Schaft 10 weist einen Schaftübergangsabschnitt 11 und einen Schaftführungsabschnitt 12 auf. Der Schaftübergangsabschnitt 11 ist am zweiten Ende des Schafts 10 angeordnet, d.h. der Schaftübergangschnitt 11 ist angrenzend zum Arbeitsabschnitt 30 angeordnet. Am ersten Ende des Schafts 10, welches dem Verbindungsabschnitt 20 zugeordnet ist, ist der Schaftführungsabschnitt 12 ausgebildet.

Der Schaftführungsabschnitt 12 ist im vorliegenden Ausführungsbeispiel zylindrisch ausgebildet, d.h. die Kontur einer Auswand des Schaftführungsabschnitts 12a erstreckt sich im Wesentlichen parallel zur Längsachse L.

Entlang der Außenwand des Arbeitsführungsabschnitts 33a erstrecken sich in Richtung der Längsachse L vier Arbeitsabschnittstaubkanäle 34, die rillenartig ausgebildet sind. Entsprechend weist der Arbeitsführungsabschnitt 33 vier Rillen 35 auf.

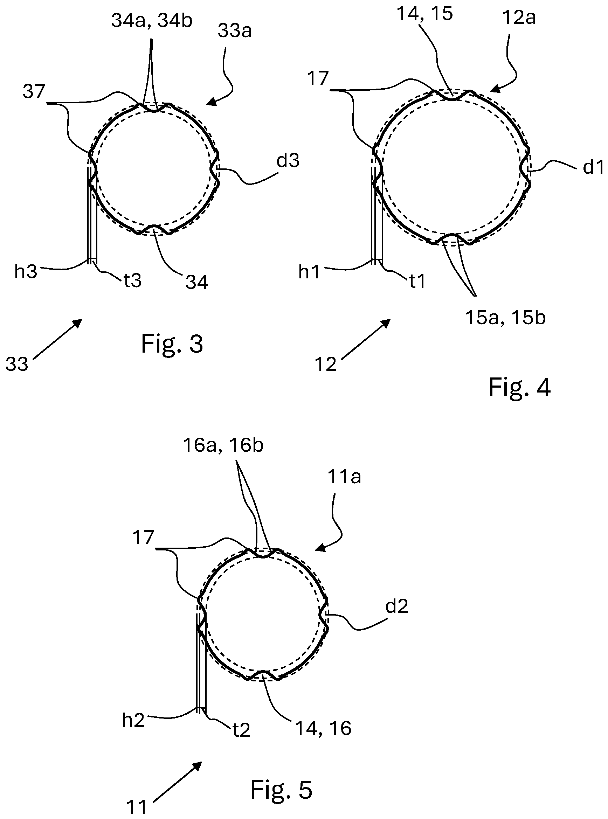

Weiterhin weist der Schaft 10 Schaftstaubkanäle 14 auf. Die Schaftstaubkanäle 14 erstrecken sich parallel zur Längsachse L an der Außenwand des Schafts 14 und sind in diesem Ausführungsbeispiel rillenartig ähnlich den Rillen 35 ausgebildet. Die Schaftstaubkanäle 14 erstrecken sich vollständig in Längsrichtung der Längsachse L über den Schaftübergangsabschnitt 11 und teilweise über den Schaftführungsabschnitt 12. Dabei bilden die Schaftstaubkanäle 14 eine Verlängerung der Arbeitsabschnittstaubkanäle 34. Nach ca. 40 % bis 50 % der Längserstreckung des Schafts 10 laufen die Schaftstaubkanäle 14 von dem Arbeitsabschnitt 30 aus. D.h., die rillenartige Vertiefung nähert sich immer mehr der Außenwand des Schaftführungsabschnitts 12a und die Tiefe t1 der Schaftstaubkanäle 14 des Schaftführungsabschnitts 12a (s. Fig. 5) nähert sich gegen 0, d.h. die Tiefe der Schaftstaubkanäle 14 nähert sich mit zunehmendem Abstand vom Schaftübergangsabschnitt 11 der Außenwand des Schaftführungsabschnitts 12a an.

Nachfolgend wird zur weiteren Erläuterung zusätzlich auf die Fig. 2 bis 5 Bezug genommen. Die Fig. 2 zeigt den Meißel gemäß Fig. 1 in einer schematischen Seitenansicht.

Wie insbesondere aus der Figur 2 in Kombination mit Fig. 3 (welche eine schematische Darstellung der Querschnittsfläche entlang A-A aus Fig. 2 ist) zu entnehmen ist, weist der Arbeitsführungsabschnitt 33 vier Arbeitsabschnittstaubkanäle 34 auf, die als Rillen 35 ausgebildet sind. Die Rillen 35 sind als Vertiefung im Material des Arbeitsabschnitts 30 ausgebildet. Die Vertiefung beträgt eine Tiefe t3 im Bezug zur Außenwand des Arbeitsführungsabschnitts 33a. Die Arbeitsabschnittstaubkanäle 34 erstrecken sich in Längsrichtung der Längsachse L. Die Arbeitsstaubkanäle 34 sind seitlich entlang der Längsrichtung der Längsachse L durch zwei Seitenwände 34a, 34b begrenzt. In einem Übergangsbereich der Seitenwände 34a, 34b zur Außenwand des Arbeitsführungsabschnitts 33a ist im vorliegenden Ausführungsbeispiel am Arbeitsführungsabschnitt 33 eine Erhöhung 37 ausgebildet. Die Erhöhung 37 ergibt sich durch bei der Herstellung der Arbeitsabschnittstaubkanäle 34 verdrängtes Material. Vorliegend wurde zur Herstellung ein Prägeverfahren verwendet, bei der ein Prägestempel in das Material des Arbeitsabschnitts 30 eingepresst wird, das Material des Arbeitsabschnitts 30 teilweise komprimiert, jedoch insbesondere Material durch den Prägestempel verdrängt wird und dieses sich seitlich als Erhöhung 37 anhäuft. Die Erhöhung 37 erhebt sich gegenüber der Außenwand des Arbeitsführungsabschnitts 33a um eine dritte Erhöhung h3. Der Arbeitsführungsabschnitt 33 weist im Bereich der Außenwand des Arbeitsführungsabschnitts 33a einen zweiten Außendurchmesser des Arbeitsführungsabschnitts d3 auf.

Aus Fig. 4, welche eine schematische Darstellung der Querschnittsfläche entlang B-B aus Fig. 2 ist, ist zu erkennen, dass der Schaftführungsabschnitt 12 ähnlich dem Arbeitsführungsabschnitt 33 vier Staubkanäle, nämlich vier Schaftstaubkanäle 14 in Form von Schaftführungsstaubkanäle 14a aufweist. Die Schaftführungsstaubkanäle 15 erstrecken sich als Rillen entlang der Längsrichtung der Längsachse L und sind als Vertiefung im Material des Schafts 10 ausgebildet. Die Schaftführungsstaubkanäle 15 sind seitlich entlang der Längsrichtung der Längsachse L durch zwei Seitenwände 15a, 15b begrenzt. In einem Übergangsbereich der Seitenwände 15a, 15b der Schaftführungsstaubkanäle 15 zur Außenwand des Schaftführungsabschnitts 12a ist im vorliegenden Ausführungsbeispiel am Schaft 10 eine Erhöhung 17 ausgebildet. Die Erhöhung 17 des Schafts 10 ergibt sich wie die Erhöhung 37 des Arbeitsabschnitts 30 durch den Herstellungsprozess der Schaftführungsstaubkanäle 15 mittels Prägen. Die Erhöhung 17 erhebt sich gegenüber der Außenwand des Schaftführungsabschnitts 12a um eine erste Erhöhung h1. Der Schaftführungsabschnitt 12 weist im Bereich der Außenwand des Schaftführungsabschnitts 12a einen ersten Außendurchmesser des Schaftführungsabschnitts d1 auf.

Der Schaftübergangsabschnitt 11 verbindet den Arbeitsführungsabschnitt 33 mit dem Schaftführungsabschnitt 12. Der Schaftübergangsabschnitt 11 weist eine den Meißel nach Außen begrenzende Außenwand des Schaftübergangsabschnitts 11a auf. Der Schaftübergangsabschnitt 11 weist analog dem Schaftführungsabschnitt 12 vier Schaftstaubkanäle 14 in Form von Schaftübergangstaubkanäle 16 auf (s. in Kombination mit Fig. 5, welche eine schematische Darstellung der Querschnittsfläche entlang C-C aus Fig. 2 ist). Die Schaftübergangsstaubkanäle 16 erstrecken sich rillenartig entlang der Längsrichtung der Längsachse L und sind als Vertiefung im Material des Schafts 10 im Bereich des Schaftführungsabschnitts 12 ausgebildet. Die Schaftübergangstaubkanäle 16 sind seitlich entlang der Längsrichtung der Längsachse L durch zwei Seitenwände 16a, 16b begrenzt. In einem Übergangsbereich der Seitenwände 16a, 16b der Schaftübergangstaubkanäle 16 zur Außenwand des Schaftübergangsabschnitts 11a ist in diesem Ausführungsbeispiel am Schaft 10 bzw. am Schaftübergangsabschnitt 11 ebenfalls jeweils die Erhöhung 17 ausgebildet, die sich somit seitlich zu den Schaftübergangstaubkanälen 16 in deren Längserstreckung erstreckt. Die Erhöhung am Schaftübergangsabschnitt 11 ergibt sich vorliegend ebenfalls durch den Herstellungsprozess, nämlich Prägen. Die zweite4 Erhöhung h2 am Schaftübergangsabschnitt ist als Abstand gegenüber der Außenwand des Schaftübergangsabschnitts 11a festgelegt.

Wie insbesondere aus Fig. 2 ersichtlich, ist der Außendurchmesser des Schaftführungsabschnitts d1 größer als der Außendurchmesser des Arbeitsführungsabschnitts d3. Der Schaftübergangsabschnitt 11 verbindet den Arbeitsführungsabschnitt 33 mit den Schaftführungsabschnitt 12. Die Außenwand des Schaftübergangsabschnitts 11a bildet dabei einen Übergang zwischen der Außenwand des Arbeitsführungsabschnitts 33a mit der Außenwand des Schaftführungsbereichs 33. Aufgrund der Differenz zwischen Außendurchmesser des Arbeitsführungsabschnitts d3 und dem Außendurchmesser des Schaftführungsabschnitts d1 variiert der Außendurchmesser des Schaftübergangsabschnitts d2 entlang der Längserstreckung der Längsachse L von d3 bis d1 in Richtung vom Arbeitsführungsabschnitt 33 zum Schaftführungsabschnitt 11 hin. Somit entspricht das Maß des Außendurchmessers des Schaftübergangsabschnitts d2 an der Grenze zum Arbeitsführungsabschnitt 33 dem Außendurchmesser des Arbeitsführungsabschnitts d3. Weiterhin entspricht das Maß des Außendurchmessers des Schaftübergangsabschnitts d2 an der Grenze zum Schaftführungsabschnitt 11 dem Außendurchmesser des Schaftführungsabschnitts d1.

Grundsätzlich ist vorgesehen, dass die Außenwand des Schaftübergangsabschnitts 11a keinen Bereich aufweist, der im Bezug zur Längsachse L des Meißels wenigstens 90° aufweist. Vorliegend beträgt die Steigung der Außenwand des Schaftübergangsabschnitts 11a konstant 8°. Vorzugsweise beträgt die Steigung zwischen 4° und 15°.

Die Arbeitsabschnittstaubkanäle 34 und die Schaftstaubkanäle 14 sind korrespondierend ausgebildet, d.h. dass die Schaftstaubkanäle 14 entsprechend durch die vier Schaftstaubkanäle 14 fortgeführt werden. Die vier Schaftstaubkanäle 14 umfassen jeweils einen Schaftübergangskanal 16 der durch einen der vier Schaftführungskanal 15 fortgeführt wird. Die vier Arbeitsabschnittstaubkanäle 34 und Schaftstaubkanäle sind 14 sind gleichmäßig radial an der Außenwand des Arbeitsführungsabschnitts 33a sowie an der Außenwand des Schafts 10 verteilt angeordnet.

Der Meißel 1 ist mehrteilig ausgeführt, nämlich aus einem ersten Teil, welcher durch den Arbeitsabschnitt 30 ausgebildet ist, und einen zweiten Teil, welcher durch den Schaft 10 und Verbindungsabschnitt 20 ausgebildet ist. Der Arbeitsabschnitt 30 ist über eine Schweißzone 40 mittels Reibschweißen mit dem Schaft 10 verbunden.

Weiterhin ist der Arbeitsabschnitt 30, insbesondere der Arbeitsendbereich 32, aus einem Material ausgebildet, das in einem Temperaturbereich von wenigstens 0°C bis 250°C, insbesondere von 0°C bis 500°C eine gleichbleibende Härte aufweist. Ein solches Material ist insbesondere ein hochlegierter martensitischer Chromstahl, vorzugsweise mit Molybdän und/ oder Vanadium als Legierungselemente.

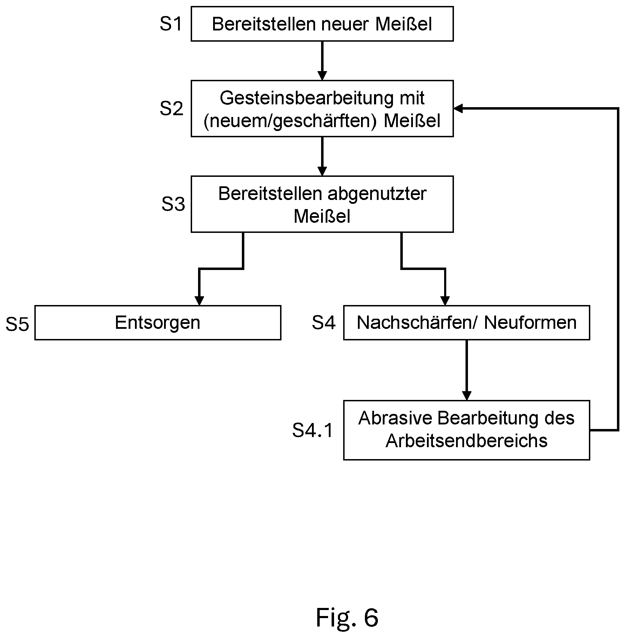

In der Fig. 6 ist skizzenhaft ein Verfahren zur Verwendung eines Meißels, umfassend ein Verfahren zum Nachschärfen eines Meißels, dargestellt.

Ausgangspunkt S1 des Verfahrens zur Verwendung ist ein Bereitstellen eines neuen Meißels. Der Meißel ist wie oben beschrieben ausgebildet. Dies bedeutet, dass der Meißel einen Arbeitsabschnitt aufweist, dessen Härte in einem Temperaturbereich von 0°C bis wenigstens 250°C, vorzugsweise von 0°C bis 500°C, während einer Temperatureintragsdauer von wenigstens 30s, vorzugsweise von wenigstens 120s, im Wesentlichen gleichbleibt.

In einem nachfolgenden Schritt wird der neue Meißel aus S1 im Schritt S2 zur Bearbeitung von Gestein, insbesondere Mauerwerk wie Beton oder Ziegel, an wenigstens einer Baustelle eingesetzt. Dabei wird der Meißel in der Regel in eine Werkzeugmaschine eingespannt. Die Werkzeugmaschine beaufschlagt den Meißel, um eine translatorische Bewegung entlang seiner Längsachse auszuführen. Dazu gibt die Werkzeugmaschine einen Kraftimpuls auf seine Schlagfläche (z. B. s. Schlagfläche 22 in Fig. 2) und beschleunigt den Meißel zu einer Bewegung in Richtung des Arbeitsendbereichs (z. B. s. Arbeitsendbereich 32 in Fig. 2), so dass der Kraftimpuls als Schlagimpuls auf das zu bearbeitende Material (Gestein) übertragen wird. Somit wird der Arbeitsendbereich besonders beansprucht. Während eine bewusste Schädigung des zu bearbeitenden Materials vorgenommen wird, wird der Arbeitsendbereich ungewollt beschädigt, insbesondere verformt. Zumindest der Bereich des Arbeitsendbereichs, der mit dem zu bearbeitenden Material zu dessen Bearbeitung in Kontakt kommt, wird durch die Bearbeitung des Gesteins verformt, abgeflacht und/ oder abgeschabt. Der Meißel wird somit abgenutzt, so dass im Schritt S3 ein abgenutzter Meißel vorliegt.

Ist die Abnutzung des Meißels in einem Grad, dass eine weitere Bearbeitung des Materials nicht wie beabsichtigt durchgeführt werden kann, d.h. die Bearbeitungsqualität und Bearbeitungszeit entspricht nicht dem Maße, welche von einem Arbeiter gewünscht wird, muss entschieden werden, ob gemäß Schritt S4 ein Nachschärfen durchgeführt werden kann bzw. soll. Ist ein Nachschärfen gemäß Schritt S4 nicht mehr möglich oder wirtschaftlich nicht sinnvoll, wird der Meißel gemäß Schritt S5 entsorgt.

Während des Schritts S4, dem Nachschärfen, wird der Arbeitsendbereich des Meißels im Teilschritt S4.1 mechanisch abrasiv nachgeschärft. Dabei wird der Arbeitsendbereich, insbesondere der Bereich des Arbeitsendbereichs, der mit dem zu bearbeitenden Material während der Bearbeitung in Kontakt kommt, relativ zur Oberfläche eines Schleifelements, beispielsweise Schleifstein, bewegt. Dabei kann der Meißel und/ oder das Schleifelements bewegt werden. Beispielsweise ist das Schleifelement eine rotierende Schleifscheibe mit einer radialen Außenkante und zwei sich senkrecht zur Rotationsachse erstreckende Grundflächen. Der Arbeitsendbereich des Meißels kann beispielsweise an der rotierenden Außenkante oder an einer der rotierenden Grundflächen angelegt werden. Das Schleifelement weist eine raue Oberfläche auf, so dass aufgrund Reibung mit dem Arbeitsendbereich des Meißels Material davon abgetragen wird.

Diese Reibung bewirkt eine lokale Erwärmung, was einen Temperatureintrag von bis zu 500°C, vorzugsweise maximal von 250°C, zur Folge hat. Bei Meißel des Standes der Technik bewirkt eine solche Erwarmung ein Abnehmen der Härte des Materials am Arbeitsendbereich. Der im Schritt S1 bereitgestellte erfindungsgemäße Meißel weist jedoch ein Material auf, bei dem die Härte über einem Temperaturbereich von 0°C bis wenigstens 250°C, vorzugsweise von 0°C bis 500°C, während einer Temperatureintragsdauer von wenigstens 30s, vorzugsweise von wenigstens 120s, im Wesentlichen gleichbleibt. Der Temperatureintrag beim Nachschärfen dauert in der Regel weniger als 30s. Somit ist durch das Nachschärfen und damit Neuformen des Meißels im Schritt S4 keine Verringerung der Härte an dem Arbeitsendbereich gegeben.

Sofern der Meißel der gewünschten (erneuerten) Form entspricht, wird nach der abrasiven Bearbeitung des Arbeitsendbereichs dieser wieder zur erneuten Verwendung zur meißelnden Bearbeitung von Material wie Gestein als geschärfter Meißel, d.h. dem Schritt S2, bereitgestellt.

Während Meißel des Standes der Technik bei jedem Nachschärfen an Härte verlieren, nutzt sich der Meißel immer schneller ab. Die Verwendungsdauer eines solchen bisherigen Meißels verringert sich stetig. Damit geht auch einher, dass das Material des Arbeitsendbereichs sehr schnell abnimmt, bis kein Nachschärfen möglich wäre. Mit dem vorliegenden Verfahren und dem erfindungsgemäßen Meißel wird die Härte des Arbeitsendbereichs im Wesentlichen konstant gehalten, selbst nach mehrmaligem Nachschärfen, beispielsweise drei bis zehn Mal. Somit ist auch für die zukünftige Verwendung kein zunehmender Grad an Abnutzung gegeben. Der Meißel kann damit länger verwendet werden, wodurch der Meißel und das vorliegend beschriebene Verfahren nachhaltiger gegenüber dem Stand der Technik ist.

Darüber hinaus ist gemäß dem Verfahren kein Temperieren vor dem Nachschärfen sowie kein Temperieren nach dem Nachschärfen vorgesehen, da aufgrund des bereitgestellten Meißels kein zusätzlicher Schritt zum Bereitstellen eines nachgeschärften Meißels mit ausreichender Härte notwendig ist. Entsprechende Energie und Material sowie Betriebsmittel können eingespart bzw. weggelassen werden.

Auch aus diesem Aspekt ist das erfindungsgemäße Verfahren wie in der Fig. 6 dargestellt nachhaltig gegenüber einem bisherigen Verfahren zum Nachschärfen und zur Verwendung eines Meißels des Standes der Technik.

In den Figuren dargestellten und hier beschriebenen Ausführungsformen sind nur beispielhaft. Es versteht sich selbst, dass eine Kombination von Merkmalen verschiedener Ausführungsformen, sofern von den Patentansprüchen abgedeckt, möglich ist.

### Bezugszeichenliste

- 1: Meißel
- 10: Schaft
- 11: Schaftübergangsabschnitt
- 11a: Außenwand des Schaftübergangsabschnitts
- 12: Schaftführungsabschnitt
- 12a: Außenwand des Schaftführungsabschnitts
- 14: Schaftstaubkanäle
- 15: Schaftführungsstaubkanäle
- 15a, 15b: Seitenwände
- 16: Schaftübergangstaubkanäle
- 16a, 16b: Seitenwände
- 17: Erhöhung
- 20: Verbindungsabschnitt
- 22: Schlagfläche
- 23: Einsteckbereich
- 30: Arbeitsabschnitt
- 31: freies Ende
- 32: Arbeitsendbereich
- 33: Arbeitsführungsabschnitt
- 33a: Außenwand des Arbeitsführungsabschnitts
- 34: Arbeitsabschnittstaubkanäle
- 34a, 34b: Seitenwände
- 35: Rille
- 37: Erhöhung
- 38: Seitenflächen
- 39: Spitze
- 40: Schweißzone
- d1: erster Außendurchmesser des Schaftführungsabschnitts
- d2: dritter Außendurchmesser des Schaftübergangsabschnitts
- d3: zweiter Außendurchmesser des Arbeitsführungsabschnitts
- h1: erste Erhöhung
- h2: zweite Erhöhung
- h3: dritte Erhöhung
- L: Längsachse
- t1: erste Tiefe des Schaftführungsabschnitts
- t2: zweite Tiefe des Schaftführungsabschnitts
- t3: dritte Tiefe des Schaftübergangsabschnitts

## Patentansprüche

1. Meißel (1) aufweisend:
einen Schaft (10), der sich entlang einer Längsachse (L) erstreckt,
einen Verbindungsabschnitt (20), der an einem ersten Ende des Schafts (10) angeordnet ist und
einen Arbeitsabschnitt (30), der an einem zweiten Ende des Schafts (10) angeordnet ist, das dem ersten Ende des Schafts (10) gegenüber liegt, wobei
die Längsachse (L) durch den Verbindungsabschnitt (20), den Schaft (10) und den Arbeitsabschnitt (30) verläuft,
**dadurch gekennzeichnet, dass**
der Arbeitsabschnitt (30) ein Material aufweist, das eine gleichbleibende Härte in einem Temperaturbereich von wenigstens 0°C bis 250°C aufweist.

2. Meißel (1) nach Anspruch 1, **dadurch gekennzeichnet, dass** das Material des Arbeitsabschnitts (30) eine gleichbleibende Härte in einem Temperaturbereich von 0°C bis 500°C aufweist

3. Meißel (1) nach einem der vorhergehenden Ansprüche, **dadurch gekennzeichnet, dass** Arbeitsabschnitt (30) an seinem freien Ende (31) einen Arbeitsendbereich (32) aufweist, wobei der Arbeitsendbereich (32) in Erstreckung der Längsachse (L) in einer ersten Richtung vom Schaft (10) zum freien Ende (31) verjüngend ausgebildet ist.

4. Meißel (1) nach Anspruch 3, **dadurch gekennzeichnet, dass** der Arbeitsendbereich (32) des Arbeitsabschnitts (30) eine Spitze aufweist, insbesondere als eine pyramidenförmige Spitze ausgebildet ist.

5. Meißel (1) nach Anspruch 3, **dadurch gekennzeichnet, dass** der Arbeitsendbereich (32) des Arbeitsabschnitts (30) als Pyramidenstumpf, ausgebildet ist.

6. Meißel (1) nach einem der vorhergehenden Ansprüche, **dadurch gekennzeichnet, dass** der Arbeitsabschnitt (30) und der Schaft (10) mittels Schweißen, insbesondere Reibschweißen an einer Schweißzone (40) miteinander verbunden sind.

7. Meißel (1) nach einem der vorhergehenden Ansprüche, **dadurch gekennzeichnet, dass** der Arbeitsabschnitt (30) nachschleifbar ausgebildet ist, wobei nach wenigstens drei Nachschleifvorgänge des Arbeitsabschnitts (30) und/ oder nach wenigstens einem Termperatureintrag am Arbeitsabschnitt (30) von maximal 500°C seine Härte in einem Toleranzbereich von 10 % beibehält.

8. Meißel (1) nach einem der vorhergehenden Ansprüche, **dadurch gekennzeichnet, dass** der Arbeitsabschnitt (30) zwischen dem Arbeitsendbereich (32) und dem Schaft (10) einen Arbeitsführungsabschnitt (33) aufweist, wobei eine erste Querschnittsfläche senkrecht zur Längsachse (L) des Arbeitsführungsabschnitts (33) maximal 90 % einer ersten Querschnittsfläche senkrecht zur Längsachse (L) des Schafts (10) beträgt.

9. Meißel (1) nach Anspruch 8, **dadurch gekennzeichnet, dass** der Schaft (10) einen Schaftführungsabschnitt (12) und einen Schaftübergangsabschnitt (11) aufweist, wobei der Schaftübergangsabschnitt (11) an einem Ende des Schafts in Längsrichtung der Längsachse (L) zum Arbeitsabschnitt (30) ausgebildet ist und der Schaftführungsabschnitt (12) zwischen dem Schaftübergangsabschnitt (11) und dem Verbindungsabschnitt (20) ausgebildet ist; wobei ein erster Außendurchmesser (d1) des Schaftführungsabschnitts (12) größer ist als ein zweiter Außendurchmesser (d2) des Arbeitsführungsabschnitts (33); und wobei eine Außenwand (11a) des Schaftübergangsabschnitts (11) ausgebildet ist, eine Außenwand (12a) des Schaftführungsabschnitts (12) mit einer Außenwand (33a) des Arbeitsführungsabschnitts (33) im Wesentlichen zu verbinden, wobei sich ein dritter Außendurchmesser (d3) des Schaftübergangsabschnitts (11) vom Schaftführungsabschnitt (12) zum Arbeitsführungsabschnitt (33) in Richtung vom Schaftführungsabschnitt (12) zum Arbeitsführungsabschnitt (33) verkleinert; und wobei eine größte Steigung der Außenwand des Schaftübergangsabschnitts (11a) vom Arbeitsabschnitt (30) zum Schaftführungsabschnitt (12) gegenüber der Längsachse (L) des Meißels (1) kleiner als 90°, insbesondere kleiner als 45°, beträgt.

10. Meißel (1) nach einem der vorhergehenden Ansprüche, **dadurch gekennzeichnet, dass** der Arbeitsabschnitt (30) wenigstens zwei Arbeitsabschnittstaubkanäle (34) aufweist, die sich jeweils als Rille (35) in Längserstreckung der Längsachse (L) des Arbeitsabschnitts (30) erstrecken.

11. Meißel (1) nach Anspruch 10, **dadurch gekennzeichnet, dass** die wenigstens zwei Arbeitsabschnittstaubkanäle (34) des Arbeitsabschnitts (30) als Vertiefung an der Außenwand des Arbeitsabschnitts (30) ausgebildet sind.

12. Meißel (1) nach einem der Ansprüche 10 bis 11, **dadurch gekennzeichnet, dass** der Schaft (10) zumindest zwei Schaftstaubkanäle (14) aufweist, die sich zumindest partiell über den Schaft (10) in Längserstreckung der Längsachse (L) erstrecken.

13. Meißel (1) nach Anspruch 12, **dadurch gekennzeichnet, dass** die Schaftstaubkanäle (14) jeweils korrespondierend zur den Arbeitsabschnittstaubkanäle (34) ausgebildet sind.

14. Meißel (1) nach einem der Ansprüche 10 bis12, **dadurch gekennzeichnet, dass** die Außenfläche des Arbeitsabschnitts (30) und/ oder des Schafts (10) in einem Übergangsbereich der jeweiligen Staubkanäle (34, 14) an ihren in Längserstreckung der Längsachse (L) erstreckenden Rändern eine wulstartige Erhöhung (37, 17) aufweisen.

15. Verfahren zum Nachschärfen eines Meißels (1), umfassend die Schritte:
bereitstellen eines Meißels (1) nach einem der Ansprüche 1 bis 14;
abrasives Schleifen des Arbeitsabschnitts (30), insbesondere des freien Endes, und Formen einer des freien Endes zu einer Arbeitsgeometrie, insbesondere zu einer Meißelkante und/ oder Meißelspitze mit einer Arbeitstemperatur an dem Arbeitsbereich von 200°C bis zu 500°C, wobei
vor dem Schleifen und Formen des Arbeitsabschnitts (30) kein Vortemperierschritt durchgeführt wird und nach dem Schleifen und Formen des Arbeitsbereichs kein Nachtemperierschritt, insbesondere kein Härten, durchgeführt wird, wobei
eine Härte des Arbeitsabschnitts (30) nach dem Schleifen und Formen gleich der Härte des Arbeitsbereichs (30) vor dem Schleifen und Formen entspricht.
